# EUROPEAN PATENT SPECIFICATION

(11) **EP 0 462 575 B1**
(45) Date of publication and mention of the grant of the patent: **15.05.1996**
(21) Application number: 91109988.5
(22) Date of filing: 18.06.1991
(51) Int. Cl.: H01M 4/48, H01M 4/58, C01G 51/00

(54) **Cathode active material for lithium secondary batteries**
Aktives Kathodenmaterial für Lithium-Sekundärbatterien
Matière active cathodique pour batteries secondaires au lithium

(30) Priority: 20.06.1990 JP 162296/90
(43) Date of publication of application: 27.12.1991
(73) Proprietor: SONY CORPORATION, Tokyo (JP)
(72) Inventor: Miyai, Seiichi, c/o SONY CORPORATION, Tokyo (JP)
(74) Representative: TER MEER - MÜLLER - STEINMEISTER & PARTNER

(56) References cited:
- EP-A- 0 421 421
- US-A- 4 567 031
- WORLD PATENTS INDEX LATEST Week 8841, Derwent Publications Ltd., London, GB; AN 88-289203

## Description

### BACKGROUND OF THE INVENTION

The present invention relates to a cathode active material LiCoO₂ used for lithium secondary batteries.

The cathode active material LiCoO₂ for the lithium secondary batteries is disclosed in Japanese Patent Publication No. 59507/1988. The cathode active material LiCoO₂ can be obtained by sintering Li₂CO₃ and CoCO₃, as disclosed by EP-A-0 421 421.

### OBJECTS AND SUMMARY OF THE INVENTION

It is an object of the present invention to provide a cathode active material for a lithium secondary battery having an improved discharge capacity.

It is another object of the present invention to provide a cathode active material for a lithium secondary battery having a reduced self-discharge ratio.

According to the present invention, there is provided a cathode active material LiCoO₂ for a lithium secondary battery having a BET specific surface area not greater than 2 m/g.

According to a preferred embodiment, the cathode active material LiCoO₂ of claim 1 contains residual Li₂CO₃ in an amount not exceeding 10 wt%.

### BRIEF DESCRIPTION OF THE DRAWINGS

Fig. 1 is a sectional view showing the structure of the battery used to measure the characteristic properties.

Fig. 2 is a graph showing the dependence of discharge capacity on the amount of residual Li₂CO₃.

Fig. 3 is a graph showing the relationship between the specific surface area and the crushing time.

Fig. 4 is a graph showing the relationship between the Li₂CO₃ content and the specific surface area.

Fig. 5 is a graph in which the Li₂CO₃ content and moisture content are plotted against the specific surface area.

Fig. 6 is a graph showing the dependence of self-discharge ratio on the specific surface area.

### DESCRIPTION OF THE PREFERRED EMBODIMENTS

It was found that the lithium secondary battery has a low discharge capacity if a large amount of residual Li₂CO₃ remains in the active material formed by the decarboxylation reaction upon sintering Li₂CO₃ and CoCO₃ to obtain LiCoO₂. (In other words, this Li₂CO₃ contributes nothing to the discharge capacity but acts as an insulation material and lowers the discharge capacity.) It was also found that any attempt to increase the reaction area by finely crushing the reaction product Li₂CO₃ ends up with an increase of specific surface area and an increase of self-discharge rather than an increase of discharge capacity. These findings gave a clue to improvements.

According to one aspect of the present invention, the cathode active material LiCoO₂ for lithium secondary batteries contains residual Li₂CO₃ in an amount not exceeding 10 wt% for the total amount of the sintered product and has a BET specific surface area not greater than 2 m/g.

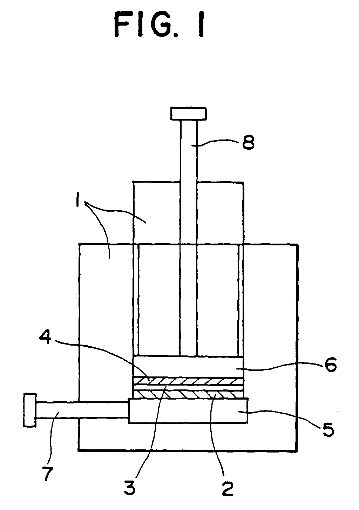

The positive electrode active material pertaining to the present invention was tested for its charge-discharge characteristics using a battery constructed as shown in Fig. 1 which is a schematic sectional view. The battery is made up of a container (1) of Teflon (a trade name of DuPont), a Li anode (2), a spacer (3), and a cathode (4). The battery also has counter electrodes (5) and (6) of stainless steel, which are connected to the Li anode (2) and the cathode (4), respectively, and positive and negative terminals (7) and (8), which are connected to the counter electrodes (5) and (6), respectively.

The cathode was obtained by mixing the active material LiCoO₂ of the present invention, polyvinylidene fluoride, and N-methyl-2-pyrrolidone for 5 minutes, applying the resulting mixture to an aluminum foil, drying the mixture at 60°C, and finally punching the mixture-coated aluminum foil. The anode is a Li metal plate. The electrolyte is propylene carbonate and 1,2-dimethoxyethane with volume ratio 1 to 1 containing 1 mole of LiClO₄.

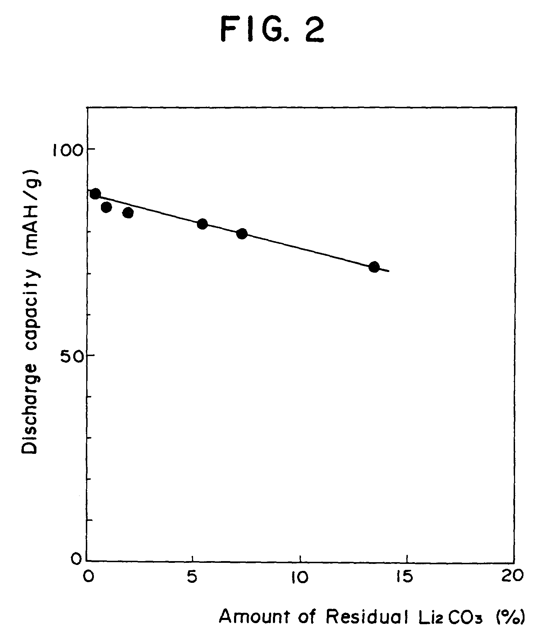

The above-mentioned battery has the discharge capacity which varies depending on the amount of Li₂CO₃ in LiCoO₂, as shown in Fig. 2. It is noted that the discharge capacity does not decrease below 75 mAH/g if the amount of residual Li₂CO₃ does not exceed 10 wt%.

In the example of the present invention, the positive electrode active material LiCoO₂ was produced by three steps of (i) firing, (ii) cooling, and (iii) crushing.

Prior to firing, Li₂CO₃ and CoCO₃ were intimately mixed in a ball mill so that the decarboxylation reaction takes place completely. The mixture was spread to a thickness of 5-20 mm in a boat or crucible. Firing was carried out under a dry air stream.

Thus there were obtained two samples (sample 1 and 2) of cathode active material. They were analyzed to determine the amount (wt%) of residual Li₂CO₃. Further, three samples (sample 3, 4 and 5) of cathode active material were prepared by the method which is different from the above-mentioned one. The samples 3, 4 and 5 were also analyzed to determine the amount (wt%) of residual Li₂CO₃. The results are shown in Table 1.

The determination of Li₂CO₃ was conducted by FT-IR (Fourier transform infrared spectroscopy). Incidentally, in the preparation of the two samples and three comparative samples, the cooling step (ii) was carried out slowly and the crushing step (iii) was carried out in dry air.

**Table 1**

| | Container used for firing | Thickness of mixture spread | Air stream | Residual Li₂CO₃ |
|---|---|---|---|---|
| Sample 1 | Crucible | 5 mm | yes | 0% |
| Sample 2 | Boat | 10 mm | yes | 0% |
| Sample 3 | Boat | 10 mm | no | 1% |
| Sample 4 | Crucible | 25 mm | yes | 1% |
| Sample 5 | Crucible | 25 mm | no | 2% |

It is noted from Table 1 that it is desirable that the firing step (i) be carried out under the above-mentioned conditions.

In another example, the cooling step (ii) was carried out under different conditions as shown in Table 2, and the amount of residual Li₂CO₃ in the product was determined. The results are shown in Table 2.

**Table 2.**

| Cooling conditions | Amount of residual Li₂CO₃ (%) |
|---|---|
| In dehydrating and decarboxylating air | 0 |
| Under dry nitrogen stream | 0 |
| Rapid cooling in liquid nitrogen | 0 |
| Under undried nitrogen stream | 5.5 |
| Slow cooling in air | 2.5 |
| Rapid cooling in water | 6.5 |

It is noted from Table 2 that it is preferable to perform the cooling step in a dehydrating and decarboxylating atmosphere. Incidentally, firing was carried out in pellet form, 15 mm in diameter and 5 mm thick, molded under a pressure of 10 tons/cm.

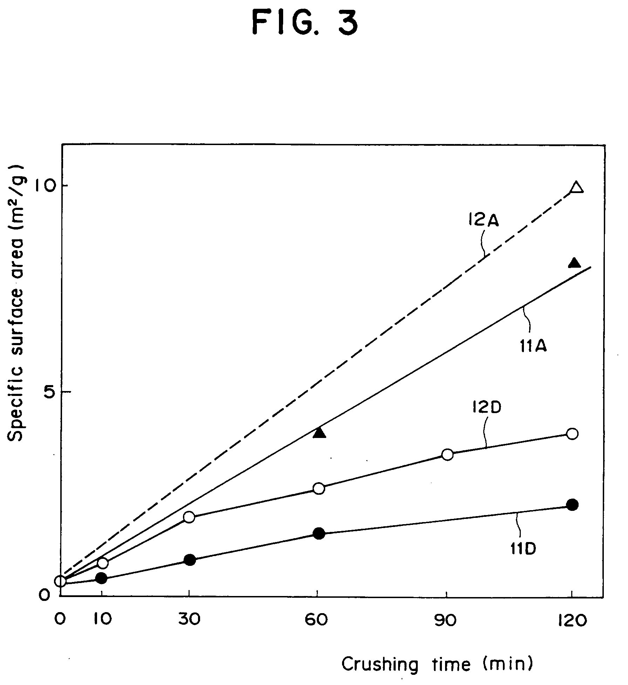

The crushing step (iii) should be performed at 20°C in a dry room (dew point = -40°C). In the case of crushing by an automatic mortar, the crushing time affects the specific surface area (m/g) according to BET absorption method of the resulting powder as shown in Fig. 3. Data in Fig. 3 were obtained by crushing pellets having the above-mentioned dimensions. Curve 11D denotes the sample containing 1.0% Li₂CO₃ before crushing, which was crushed in a dry room. Curve 11A denotes the sample containing 1.0% Li₂CO₃ before crushing, which was crushed in air at normal temperature (20°C) and normal humidity (70% RH). Curve 12D denotes the sample containing 4.5% Li₂CO₃ before crushing, which was crushed in a dry room. Curve 12A denotes the sample containing 4.5% Li₂CO₃ before crushing, which was crushed in air at normal temperature (20°C) and normal humidity (70% RH). It is noted from Fig. 3 that the raw material containing a less amount of Li₂CO₃ gives the crushed powder having a smaller specific surface area. It is also noted that the crushing in a dry room gives the powder having a smaller specific surface area.

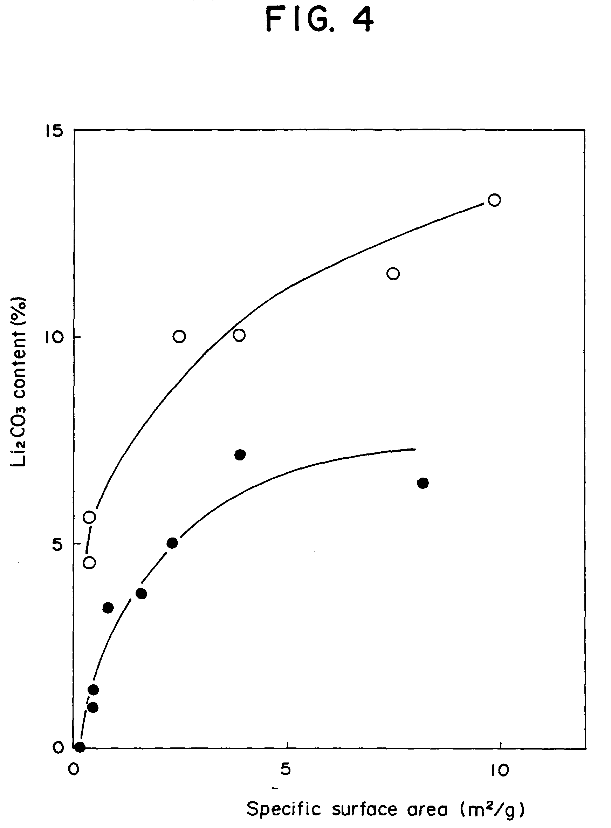

The amount of Li₂CO₃ remaining after crushing affects the specific surface area of the crushed powder as shown in Fig. 4. Black circles represent data in the case of crushing in a dry room. White circles represent data in the case of crushing at normal temperature and normal humidity. It is noted from Fig. 4 that the specific surface area increases as the amount of Li₂CO₃ increases. It is also noted that the specific surface area is higher in the case of crushing at normal temperature and normal humidity than in the case of crushing in a dry room. It is considered that Li₂CO₃ and/or moisture increases the coefficient of friction between particles and hence increases the crushing efficiency.

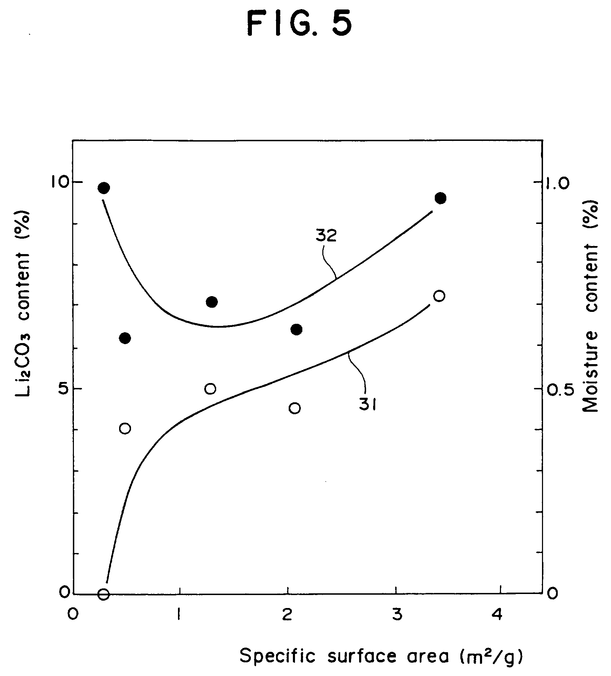

For investigation into the mechanism by which Li₂CO₃ is formed, LiCoO₂ containing 1% moisture (measured by KF (Karl Fischer) method) was crushed in argon. It was found that the crushed powder varies in specific surface area depending on the Li₂CO₃ content and moisture content as shown in Fig. 5. Curve 31 denotes the relationship between the Li₂CO₃ content and the specific surface area, and curve 32 denotes the relationship between the moisture content and the specific surface area. It is noted that the higher the Li₂CO₃ content and moisture content, the higher the specific surface area. Presumably, this is because adsorbed water takes part in mechanochemical reaction with lithium in the initial stage and then a trace amount of moisture in argon becomes adsorbed or takes part in reaction in the crushing stage which lasts 2 hours.

It is concluded from the foregoing that Li₂CO₃, which lowers the discharge capacity, results from mechanochemical reaction with moisture and CO₂ which are present in the atmosphere in which crushing is performed. Therefore, it is desirable that crushing be carried out in an inert gas atmosphere within a short time. (Prolonged crushing leads to an increased specific surface area.)

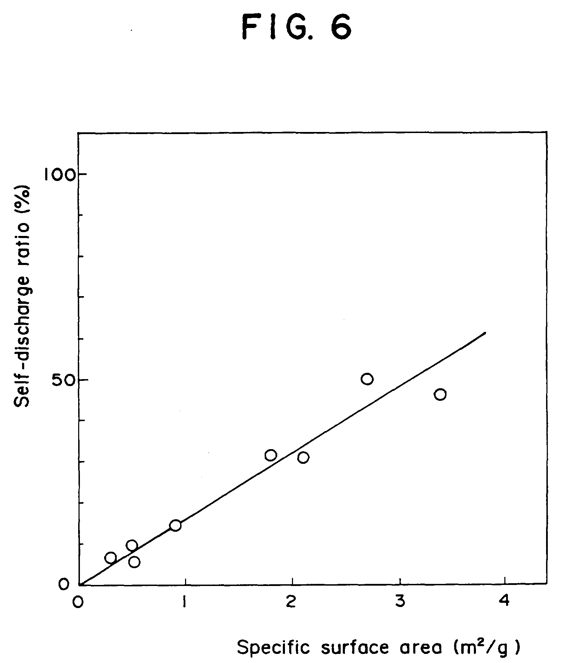

In the meantime, the lithium battery containing LiCoO₂ as the cathode active material varies in self-discharge depending on the specific surface area of LiCoO₂, as shown in Fig. 6. It is noted from Fig. 6 that if the self-discharge ratio is to be lower than 30%, the specific surface area of LiCoO₂ should be lower than 2 m/g. It is also noted that if the self-discharge ratio is to be lower than 10%, the specific surface area of LiCoO₂ should be lower than 1 m/g.

### Example 1

Li₂CO₃ and CoCO₃ were mixed for 12 hours using a ball mill. The resulting mixture, which was placed in a boat, was fired under a dry air stream at 900°C for 5 hours. The fired product was cooled in argon and then crushed in argon.

### Comparative Example 1

The same raw materials as used in Example 1 were fired in a lidded crucible (in the absence of air) at 900°C for 5 hours. The fired product was slowly cooled at normal temperature and normal humidity, and then crushed in air at normal temperature and normal humidity.

### Comparative Example 2

The same procedure as in Comparative Example 1 was repeated except that the duration of crushing was reduced to 2 hours.

The LiCoO₂ samples obtained in Example 1 and Comparative Examples 1 and 2 were found to have the characteristics as shown in Table 3.

**Table 3**

| | Li₂CO₃ (%) | Specific surface area (m/g) | Discharge capacity (mAH/g) | Self-discharge at 60°C for 15 hours (%) |
|---|---|---|---|---|
| Example 1 | 0 | 1 | 105 | 5 |
| Comparative Example 1 | 15 | 5 | 75 | 48 |
| Comparative Example 2 | 15 | 10 | 70 | 75 |

It is noted from Table 3 that the battery containing LiCoO₂ of this invention has an increase discharge capacity and a reduced self-discharge ratio.

As mentioned above, the present invention provides a positive electrode active material LiCoO₂ which gives rise to a lithium secondary battery having an increased discharge capacity and reduced self-discharge ratio.

## Claims

1. A cathode active material LiCoO₂ for a lithium secondary battery having a BET specific surface area not greater than 2 m/g.

2. The cathode active material according to claim 1 containing residual Li₂CO₃ in an amount not exceding 10 wt%.

3. A cathode active material LiCoO₂ for a lithium secondary battery obtainable by firing Li₂CO₃ and CoCO₃ characterized by the steps of cooling the fired product and subsequently crushing into powder containing residual Li₂CO₃ in an amount not exceding 10 wt% and having a BET specific surface area not greater than 2 m/g.

## Patentansprüche

1. Ein aktives Kathodenmaterial LiCoO₂ für eine Lithium-Sekundärbatterie, das eine spezifische Oberfläche gemäß dem BET-Verfahren von nicht über 2 m/g aufweist.

2. Aktives Kathodenmaterial nach Anspruch 1, das Rest-Li₂CO₃ mit einer Menge nicht über 10 Gew.-% enthält.

3. Aktives Kathodenmaterial LiCoO₂ für eine Lithium-Sekundärbatterie, das durch Brennen von LiCO₃ und CoCO₃ erhältlich ist, **gekennzeichnet durch** die Schritte des Abkühlens des gebrannten Produkts und des anschließenden Zerkleinerns zu einem Pulver, das Rest-Li₂CO₃ mit einer Menge nicht über 10 Gew.-% enthält und eine spezifische Oberfläche gemäß dem BET-Verfahren nicht über 2 m/g aufweist.

## Revendications

1. Matière active de cathode LiCoO₂ pour une pile secondaire au lithium présentant une surface spécifique BET qui n'est pas supérieure à 2 m/g.

2. Matière active de cathode selon la revendication 1 contenant du Li₂CO₃ résiduel dans une quantité qui n'excède pas 10 % en poids.

3. Matière active de cathode LiCoO₂ pour une pile secondaire au lithium pouvant être obtenue par cuisson de Li₂CO₃ et de CoCO₃, caractérisée par les étapes consistant à refroidir le produit cuit et à le broyer ensuite en une poudre contenant du Li₂CO₃ dans une quantité n'excédant pas 10 % en poids et présentant une surface spécifique BET qui n'est pas supérieure à 2 m/g.
